# EUROPEAN PATENT APPLICATION

(11) **EP 1 270 243 A1**
(43) Date of publication of application: **02.01.2003**
(21) Application number: 02254599.0
(22) Date of filing: 28.06.2002
(51) Int. Cl.: B41J 19/20, F16H 25/24

(54) **Lead screw coupling**

(30) Priority: 28.06.2001 US 894681
(71) Applicant: Iris Graphics, Inc., Billerica, Massachusetts 01821 (US)
(72) Inventor: Pinard, Adam I., Carlisle, Massachusetts 01741 (US); Gomez, Carlos Alberto, Framingham, Massachusetts 01702 (US)
(74) Representative: Kazi, Ilya

(57) **Abstract**

A lead screw coupling that includes two universal joints. The first joint is operatively connected between a first member that includes a mounting site for coupling to a lead screw nut, and a second member. The second joint is operatively connected between the second member and a third member that includes a mounting site for coupling to a movable printer carriage. In a preferred embodiment the universal joints and the members are all defined by a plurality of slanted planar slots that are each cut along a plane that is tilted with respect to an axis of rotation of the lead screw.

## Description

### Field of the Invention

This invention relates to couplings such as couplings that are used to connect lead screw nuts to printer carriages.

### Background of the Invention

High resolution printers and other high precision machines use lead screws to achieve precise linear movement. But lead screws tend to exhibit subtle movement variations that can cause noticeable artifacts in a printer's output known as "banding." Reducing tolerances in the screw manufacturing process can reduce the extent of these artifacts, but also tends to increase the cost of the lead screw and may not entirely eliminate banding. To remedy these problems, different types of lead screw couplings have been proposed to reduce the transmission of errors from the lead screw to the printer carriage.

### Summary of the Invention

This invention involves improvements to lead screw couplings. In one general aspect, the invention features a lead screw coupling that includes two universal joints. The first joint is operatively connected between a first member that includes a mounting site for coupling to a lead screw nut, and a second member. The second joint is operatively connected between the second member and a third member that includes a mounting site for coupling to a movable printer carriage.

In preferred embodiments, the first and second universal joints and the first, second, and third members can be all cut from a single piece. The single piece can be tubular. The first and second universal joints and the first, second, and third members can be all defined by a plurality of slanted slots that are each cut along a plane that is tilted with respect to an axis of rotation of the lead screw. Each of the slots can be planar. The width of the slots can be selected to limit bending of the universal joints to a degree that is substantially less than that necessary to cause any stress within the piece to exceed an elastic limit for the piece. The slots can be each terminated at each end by a hole. The coupling can include a fourth member and a fifth member, with the slots defining at least a first articulation between the first and fourth members, at least a second articulation between the fourth and second members, at least a third articulation between the second and fifth members, and at least a fourth articulation between the fifth and third members, with the first and second articulations being within a same first plane normal to the axis of rotation of the lead screw and the third and fourth articulations being within a same second plane normal to the axis of rotation of the lead screw. The coupling can include a fifth articulation between the first and fourth members, a sixth articulation between the fourth and second members, a seventh articulation between the second and fifth members, an eighth articulation between the fifth and third members, with the fifth and sixth articulations being within the same first plane and the seventh and eighth articulations being within the same second plane. The first and second universal joints and the first, second, and third members can all be defined by a plurality of slots that are each cut from the single piece, and the slots can each be cut along a plane that is tilted with respect to an axis of rotation of the lead screw. the coupling can include a fourth member and a fifth member, with at least a first articulation between the first and fourth members, at least a second articulation between the fourth and second members, at least a third articulation between the second and fifth members, and at least a fourth articulation between the fifth and third members, and with the first and second articulations being within a same first plane and the third and fourth articulations being within a same second plane. The coupling can include a fifth articulation between the first and fourth members, a sixth articulation between the fourth and second members, a seventh articulation between the second and fifth members, an eighth articulation between the fifth and third members, with the fifth and sixth articulations being within the same first plane and the seventh and eighth articulations being within the same second plane. The mounting site can include at least one threaded hole for direct coupling to the lead screw nut via a threaded fastener. The first and second universal joints can be directly connected to the first, second, and third members via portions of a same piece.

In another general aspect, the invention features a universal joint that includes a unitary body that has an axis of rotation for rotating the joint and that includes a plurality of cuts defining at least a first articulation between a first segment and a second segment and a second articulation between the second segment and a third segment. The first and second articulations are in a same plane that is normal to the axis of rotation.

In preferred embodiments, the cuts can be slanted with respect to the axis of rotation. The cuts can be planar slots. The body can be a one-piece at least generally cylindrical body. The cuts can further define a second articulation between the first segment and the second segment and a second articulation between the second segment and the third segment. The first and second articulations can be orthogonal with respect to the axis of rotation.

In a further general aspect, the invention features a coupling that includes an at least generally tubular body with an inside surface and an outside surface. The tubular body includes five members and at least a first articulation between the first and second members and at least a second articulation between the second and third members, with the first and second articulations being within a same first plane normal to a longitudinal axis of the tubular member. The coupling also includes at least a third articulation between the third and fourth members, and at least a fourth articulation between the fourth and fifth members, with the third and fourth articulations being within a same second plane normal to a longitudinal axis of the tubular member.

In preferred embodiments, the coupling can further include a fifth articulation between the first and second members, a sixth articulation between the second and third members, with the fifth and sixth articulations being within the same first plane, at least a seventh articulation between the third and fourth members, and at least an eighth articulation between the fourth and fifth members, with the seventh and eighth articulations being within the same second plane. The first, second, third, fourth, and fifth members can be tubular members cut from a same piece and separated by flexures. The cuts defining the first, second, third, fourth, and fifth members can be slanted with respect to the axis of rotation. The cuts defining the first, second, third, fourth, and fifth members can be planar slots. The first and second articulations can be orthogonal with respect to each other about the longitudinal axis, with the third and fourth articulations being orthogonal with respect to each other about the longitudinal axis, with the fifth and sixth articulations being orthogonal with respect to each other about the longitudinal axis, and with the seventh and eighth articulations being orthogonal with respect to each other about the longitudinal axis. The first and second articulations can be orthogonal with respect to each other about the longitudinal axis, with the third and fourth articulations being orthogonal with respect to each other about the longitudinal axis.

In another general aspect, the invention features a method of coupling movement from a lead screw to a printer carriage. The method includes the steps of receiving a linear translating force from a lead screw with superimposed errors, bending in a first direction at one or more points in a first plane normal to an axis of rotation of the lead screw and at a first distance along the axis of rotation of the lead screw in response to at least some of the errors, and bending at one or more points in a second direction in a second plane normal to the axis of rotation of the lead screw and at a second distance along the axis of rotation of the lead screw different from the first distance in response to at least some of the errors. The method further includes the steps of bending in a direction at least generally orthogonal to the first direction at one or more further points in the first plane, bending in a direction at least generally orthogonal to the second direction at one or more further points in the second plane, and transmitting a corrected linear translating force to the printer carriage.

In preferred embodiments, the steps of bending in the first plane and the steps of bending in the second plane can all be steps of flexing performed by flexures defined in a single piece. The method can further include a step of limiting at least some of the steps of flexing to allow for reliable repetition of the steps of bending. The steps of bending in the first plane and the steps of bending in the second plane can all take place at different locations around the axis of rotation of the lead screw. The of bending in the first plane and the steps of bending in the second plane can each take place at a plurality of points. The steps of bending in the first plane and the steps of bending in the second plane can each take place at a two of points opposite each other with respect to the lead screw. Lead screw couplings according to the invention are advantageous in that they can be manufactured in a single piece machined with a few simple operations. The resulting lead screw coupling can therefore be made to be both less expensive and more reliable than prior art lead screw couplings. And by appropriate design of slot widths a lead screw coupling according to the invention can be designed to be very difficult to break.

Lead screw couplings according to the invention can also be made to be very precise. Because they are designed with two sets of coplanar articulations, they need not introduce vibrations or other disturbances in the motion of the printer carriage. Lead screw couplings according to the invention can therefore allow a printer to move its carriage very precisely, resulting in improved printer output.

### Brief Description of the Drawings

Fig. 1 is a perspective view of a lead screw coupling according to the invention;
Fig. 2 is an end view of the lead screw coupling of Fig. 1;
Fig. 3 is a bottom side view of the lead screw coupling of Fig. 1 shown from the vantage point described by the line 3-3 in Fig. 2; and
Fig. 4 is a side view of the lead screw coupling of Fig. 1 shown from the vantage point described by the line 4-4 in Fig. 2.

### Description of an Illustrative Embodiment

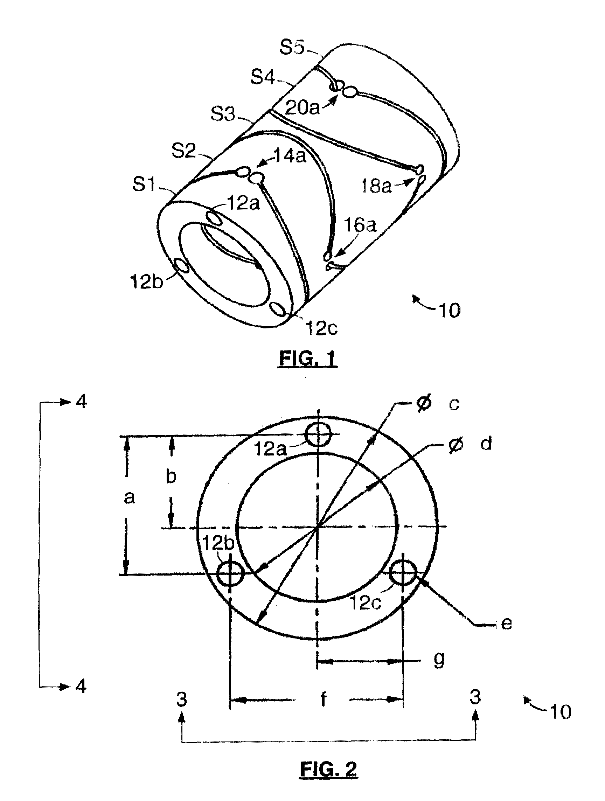

Referring to Fig. 1 and 2, an illustrative coupling 10 according to the invention includes a cylindrical body divided into an articulated series of five successive rigid sections S1, S2, S3, S4, S5. Each of the outermost sections (S1, S5) bears at least one attachment site, such as one of three equally-spaced taped holes 12 in the perimeter of the cylindrical body. Of course, one or ordinary skill in the art would recognize that a variety of other types of attachment sites could be provided.

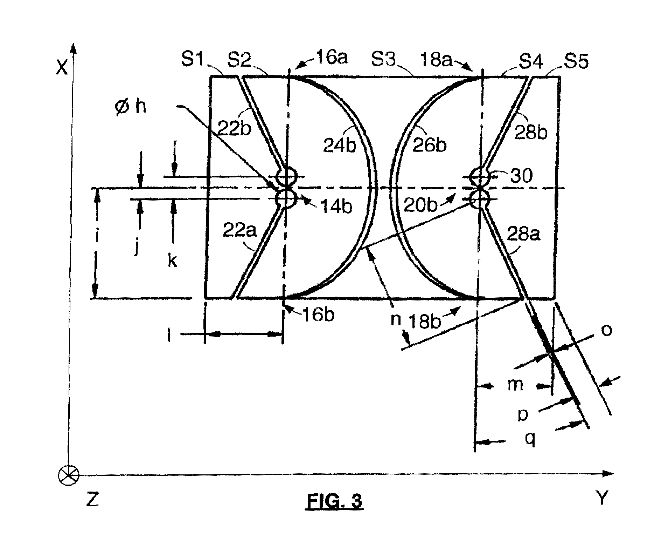

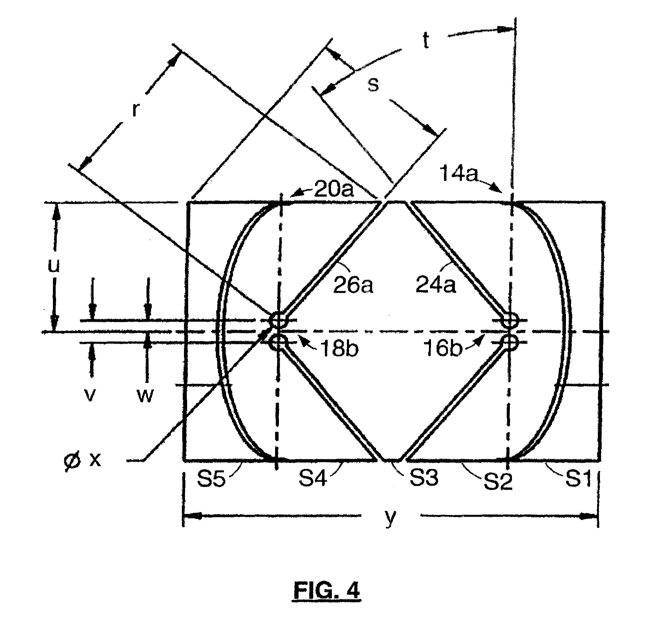

Referring also to Figs. 3 and 4, the five rigid sections are pivotably connected by a number of articulations. The first section S1 is connected to the second section S2 by a first pair of articulations 14a and 14b located on opposite sides of the cylindrical body. The second section S2 is also connected to the third section S3 by a second pair of articulations 16a and 16b located on opposite sides of the cylindrical body. The second pair of articulations is preferably offset from the first pair by 90 degrees around the circumference of the cylindrical body, and both pairs preferably lie in a same first plane normal to the longitudinal axis of the cylinder at a first distance I from the beginning of the first segment.

The third section S3 is connected to the fourth section S4 by a third pair of articulations 18a and 18b located on opposite sides of the cylindrical body. The fourth section S4 is connected to the fifth section S5 by a fourth pair of articulations 20a and 20b located on opposite sides of the cylindrical body. The third and fourth pairs of articulations are also both preferably offset from the third pair by 90 degrees around the circumference of the cylindrical body, and both pairs preferably lie in a same second plane normal to the longitudinal axis of the cylinder at a second distance m from the end of the last segment. The two planes can be at a same distance from opposite ends of the coupling (i.e., I=m), and the articulations in the first and fourth pairs and those in the second and third pairs can be designed to line up in the direction of the axis of rotation of the part, but these are not absolute functional requirements.

Referring also to Figs. 3-4, the coupling can be manufactured by cutting away from a solid cylindrical member. Preferably, this can be accomplished with a series of eight planar cuts 22a, 22b, 24a, 24b, 26a, 26b, 28a, 28b into the body of the coupling 10. These cuts are preferably each terminated with respective pairs of holes (e.g., 30), which can help to prevent breakage of the coupling at the flexures that are formed in the area of the end of the cuts.

To position the first and second pairs of articulations in the first plane and the third and fourth articulations in the second plane, the cuts are preferably inclined with respect to the longitudinal axis of the cylinder. The first cut 22a is preferably slanted from a first point on the outside of the cylinder inward and medially toward the first and second articulations 14a, 14b. The second cut 22b is preferably slanted from a second point opposite the first point on the outside of the cylinder inward and medially toward the first and second articulations 14a, 14b.

The third and fourth cuts 24a, 24b are preferably made in planes that are oppositely inclined with respect to the longitudinal axis of the coupling. The third cut 24a is preferably slanted from a third point on the outside of the cylinder inward and distally toward the third and fourth articulations 16a, 16b. The fourth cut 24b is preferably slanted from a fourth point opposite the third point on the outside of the cylinder inward and distally toward the third and fourth articulations 16a, 16b. The fifth, sixth, seventh, and eighth cuts 26a, 26b, 28a, 28b are similarly situated with respect to the third and fourth pair of articulations.

By selecting an appropriate cut width, the straight cuts can act as a limit on the bending of the articulations, thus preventing breakage. To simplify the manufacture of the device, the inclination angles of all the cuts with respect to a plane normal to the longitudinal axis of the cylinder can be made to be the same (e.g., 39 degrees).

In one illustrative embodiment, the coupling is made from a piece of high-strength cylindrical aluminum stock cut to length and bored to produce a cylindrical body. Holes (e.g., 30) are then drilled into the cylindrical body, and eight cuts are made, such as with a carbide cutting disc. The cutting operation can be streamlined by simultaneously cutting several parts in adjacent, but offset positions.

The coupling presented in this embodiment advantageously provides two sets of coplanar articulations in a single piece using only straight cuts. This results in simplified manufacturing steps that can be ganged for several parts. Straight cuts are not a functional necessity, however, and one of ordinary skill in the art would be able to conceive of a variety of other shapes for the cuts. Such cuts could be achieved through other cutting techniques, such as laser cutting, hydraulic cutting, or Electrical Discharge Machining (EDM).

Dimensions for this illustrative embodiment are presented in Table 1. This table is intended as an example only, and one of ordinary skill in the art could of course make a variety of changes to this design given particular application constraints.

**Table 1**

| Dimension | Inches | Centimeters | Dimension | Inches | Centimeters |
|---|---|---|---|---|---|
| a | 0.94 | 2.39 | m | 0.5 | 1.27 |
| b | 0.63 | 1.60 | n | 0.74 | 1.88 |
| c | 1.5 | 3.81 | o | 0.03 | 0.08 |
| d | 1 | 2.54 | p | 0.15 | 0.38 |
| e | 8-32 | | q | 25° | 25° |
| | .2 deep | .51 deep | r | 0.87 | 2.21 |
| f | 1.08 | 2.74 | s | 0.81 | 2.06 |
| g | 0.54 | 1.37 | t | 39° | 39° |
| h | 0.125 | 0.32 | u | 0.75 | 1.91 |
| i | 0.75 | 1.91 | v | 0.13 | 0.33 |
| j | 0.075 | 0.19 | w | 0.07 | 0.18 |
| k | 0.15 | 0.38 | x | 0.09 | 0.23 |
| l | 0.5 | 1.27 | y | 2.25 | 5.72 |

The coupling 10 can be connected to couple forces between a lead screw and a print head in a high-resolution ink-jet printer. This can be accomplished by connecting the attachment sites 12 on the first segment S1 of the coupling to a nut that rides the lead screw. Another set of attachment sites on the fifth segment S5 can then be attached to the printer carriage, which typically rides along precisely positioned rails. The coupling can also be used in other types of printing and imaging applications, such as for moving thermal print heads in thermal printers, or for moving mirrors in laser printers or scanners.

The coupling operates as a pair of spring-loaded end-to-end universal joints, with the articulations in the first plane defining a first universal joint, and the articulations in the second plane defining a second universal joint. Assuming that the coupling is oriented as shown in Fig. 3, the first segment S1 of the coupling 10 is pushed in the z direction by the action of the lead screw turning inside the nut. Imperfections in the lead screw, such as eccentricities or bowing, will also cause some movement in the nut in the x and y directions. The articulations in the coupling will flex to take up this movement, however, and thereby reduce or eliminate the effect of lead screw imperfections. Note that the coupling is rigid in the z direction, preventing it from expanding or contracting in length. This is important in printing and other applications where the longitudinal motion imparted by the lead screw should be uniform. Overall, the coupling can be viewed as reducing the number of constraints on the lead screw to reduce undesirable motion caused by its imperfections.

The present invention has now been described in connection with a number of specific embodiments thereof. However, numerous modifications which are contemplated as falling within the scope of the present invention should now be apparent to those skilled in the art. For example, the coupling could be manufactured with curved or even convoluted cuts, and the cuts could be moved or designed to remove substantially more material from the part, making it look different from the embodiment displayed while retaining similar operational principles. The part could also be made from other materials, from non-cylindrical stock (e.g., conical or rectangular stock), with more segments, or with single articulations in place of pairs of articulations. And while a single-part construction is currently contemplated to be advantageous, the addition of one or more moving parts could be accomplished without departing from the scope and spirit of the invention. For example, the coupling could be made of five separate parts interconnected with simple snap-fit ball-and-socket joints. It is therefore intended that the scope of the present invention be limited only by the scope of the claims appended hereto. In addition, the order of presentation of the claims should not be construed to limit the scope of any particular term in the claims.

## Claims

1. A lead screw coupling for coupling a printer carriage to a lead screw, including:
a first member including a mounting site for coupling to a lead screw nut,
a second member,
a first universal joint operatively connected between the first and second members,
a third member including a mounting site for coupling to a movable printer carriage, and
a second universal joint operatively connected between the second and third members.

2. The apparatus of claim 1 wherein the coupling includes a fourth member and a fifth member, and wherein there is at least a first articulation between the first and fourth members, at least a second articulation between the fourth and second members, at least a third articulation between the second and fifth members, and at least a fourth articulation between the fifth and third members, and wherein the first and second articulations are within a same first plane and the third and fourth articulations are within a same second plane.

3. The apparatus of claim 2 wherein the coupling includes a fifth articulation between the first and fourth members, a sixth articulation between the fourth and second members, a seventh articulation between the second and fifth members, an eighth articulation between the fifth and third members, wherein the fifth and sixth articulations are within the same first plane and the seventh and eighth articulations are within the same second plane.

4. The apparatus of any previous claim wherein the first and second universal joints and the first, second, and third members are all cut from a single piece.

5. The apparatus of claim 4 wherein the single piece is tubular.

6. The apparatus of any previous claim wherein the first and second universal joints and the first, second, and third members are all defined by a plurality of slanted slots that are each cut along a plane that is tilted with respect to an axis of rotation of the lead screw.

7. The apparatus of claim 6 wherein each of the slanted slots is planar.

8. The apparatus of claim 6 or 7 wherein the width of the slots is selected to limit bending of the universal joints to a degree that is substantially less than that necessary to cause any stress within the piece to exceed an elastic limit for the piece.

9. A universal joint, including a unitary body that has an axis of rotation for rotating the joint and that includes a plurality of cuts defining at least a first articulation between a first segment and a second segment and a second articulation between the second segment and a third segment, and wherein the first and second articulations are in a same plane that is normal to the axis of rotation.

10. A method of coupling movement from a lead screw to a printer carriage, comprising the steps of:
receiving a linear translating force from a lead screw with superimposed errors,
bending in a first direction at one or more points in a first plane normal to an axis of rotation of the lead screw and at a first distance along the axis of rotation of the lead screw in response to at least some of the errors,
bending at one or more points in a second direction in a second plane normal to the axis of rotation of the lead screw and at a second distance along the axis of rotation of the lead screw different from the first distance in response to at least some of the errors,
bending in a direction at least generally orthogonal to the first direction at one or more further points in the first plane,
bending in a direction at least generally orthogonal to the second direction at one or more further points in the second plane, and
transmitting a corrected linear translating force to the printer carriage.

11. The method of claim 10 further including the step of limiting at least some of the steps of flexing to allow for reliable repetition of the steps of bending.
